# EUROPEAN PATENT APPLICATION

(11) **EP 2 131 583 A1**
(43) Date of publication of application: **09.12.2009**
(21) Application number: 08722758.3
(22) Date of filing: 25.03.2008
(51) Int. Cl.: H04N 7/01

(54) **VIDEO TRANSMITTER, VIDEO RECEIVER, VIDEO RECORDER, VIDEO REPRODUCER, AND VIDEO DISPLAY**

(30) Priority: 29.03.2007 JP 2007087163
(71) Applicant: Sharp Kabushiki Kaisha, Osaka-shi, Osaka 545-8522 (JP)
(72) Inventor: UENO, Masafumi, Osaka-shi, Osaka 545-8522 (JP); YAMAMOTO, Kenichiroh, Osaka-shi, Osaka 545-8522 (JP); YOSHII, Takashi, Osaka-shi, Osaka 545-8522 (JP); FURUKAWA, Hiroyuki, Osaka-shi, Osaka 545-8522 (JP); YOSHIDA, Yasuhiro, Osaka-shi, Osaka 545-8522 (JP)
(74) Representative: Müller - Hoffmann & Partner
(86) International application number: PCT/JP2008/055498
(87) International publication number: WO 2008/123217

(57) **Abstract**

A video image transmitting device, a video image receiving device, a video image recording device, a video image reproducing device, and a video image displaying device all having video signal processings such as a frame rate conversion (FRC) enable prevention of degradation of the video image reproduced by a video signal generated by superimposing first and second video signals on each other. The video image transmitting device (1) includes an editing device (2) for superimposing first and second video signals on each other according to video combining information, a video image encoding processing portion (3) and a video image composite information encoding processing portion (4) for encoding the output video signal from the editing device (2) and video combining information respectively, a multiplexing processing portion (5) for multiplexing the encoded data, and a transmitting portion (6) for transmitting the multiplexed data. The video image receiving device (11) includes a receiving portion (12) for receiving the multiplexed data, a multiplexed data separating processing portion (13) for separating the multiplexed data into the video data and the video image decoding processing portion (14) and a video image composite information decoding processing portion (15) for decoding the video data and the video combining information respectively, and a video image signal processing portion (16) for subjecting the decoded video signal to a predetermined video signal processing. The video image signal processing portion (16) adequately controls the video signal processing of the portion of the second video signal superimposed on the first video signal by using the video combining information, thereby prevents image degradation of and around the portion of the second video signal caused by the video signal processing, and generates a video with higher quality.

## Description

### TECHNICAL FIELD

The present invention relates to a video image signal processing method, and more particularly, to a video image transmitting device and a video image receiving device that, when a first video image signal and a second video image signal are combined to be displayed, aim at preventing deterioration of an image in a part where the first and the second video image signals are displayed caused by a motion-compensated rate conversion processing, etc.

### BACKGROUND OF THE INVENTION

As compared to conventional cathode-ray tubes (CRTs) primarily used for realizing moving images, LCDs (Liquid Crystal Displays) have a drawback, so-called motion blur, which is the blurring of outline of a moving portion perceived by a viewer when displaying a moving image. It is pointed out that this motion blur arises from the LCD display mode itself (see, e.g., Specification of Japanese Patent No. 3295437; "Ishiguro Hidekazu and Kurita Taiichiro, "Consideration on Motion Picture Quality of the Hold Type Display with an octuple-rate CRT", IEICE Technical Report, Institute of Electronics, Information and Communication Engineers, EID96-4 (1996-06), p.19-26").

Since fluorescent material is scanned by an electron beam to cause emission of light for display in CRTs, the light emission of pixels is basically impulse-like although slight afterglow of the fluorescent material exists. This is called an impulse display mode. On the other hand, in the case of LCDs, an electric charge is accumulated by applying an electric field to liquid crystal and is retained at a relatively high rate until the next electric field is applied. Especially, in the case of the TFT mode, since a TFT switch is provided for each dot composing a pixel and each pixel normally has an auxiliary capacity, the ability to retain the accumulated charge is extremely high. Therefore, the light emission is continued until the pixels are rewritten by the application of the electric field based on the image information of the next frame or field (hereinafter, represented by the frame). This is called a hold display mode.

Since the impulse response of the image displaying light has a temporal spread in the above hold display mode, spatial frequency characteristics deteriorate along with temporal frequency characteristics, resulting in the motion blur. Since the human eye can smoothly follow a moving object, if the light emission time is long as in the case of the hold type, the movement of image seems jerky and unnatural due to the time integration effect.

To improve the motion blur in the above hold display mode, a frame rate (the number of frames) is converted by interpolating an image between frames using a known technology. This technology is called FRC (Frame Rate Converter) and is put to practical use in liquid crystal displaying devices, etc.

Conventionally known methods of converting the frame rate include various techniques such as simply repeating read-out of the same frame for a plurality of times and frame interpolation using linear interpolation between frames (see, e.g., Yamauchi Tatsuro, "TV Standards Conversion", Journal of the Institute of Television Engineers of Japan, Vol. 45, No. 12, pp.1534-1543 (1991)). However, in the case of the frame interpolation processing using the linear interpolation, unnaturalness of motion (jerkiness, judder) is generated due to the frame rate conversion, and the motion blur disturbance due to the above hold display mode cannot sufficiently be improved, resulting in inadequate image quality.

To eliminate an influence of the jerkiness, etc., and improve quality of moving images, a motion-compensated frame interpolation processing using motion vectors is proposed. Since a moving image itself is captured to generate an interpolation frame that compensated the image motion in this motion compensation processing using motion vectors, highly natural moving images may be acquired without deteriorating the resolution and generating the jerkiness. Since interpolation image signals are generated with motion compensation, the motion blur disturbance due to the above hold display mode may sufficiently be improved.

Above Specification of Japanese Patent No. 3295437 discloses a technology of motion-adaptively generating interpolation frames to increase a frame frequency of a display image for improving deterioration of spatial frequency characteristics causing the motion blur. In this case, at least one interpolation image signal interpolated between frames of a display image is motion-adaptively created from the previous and subsequent frames, and the created interpolation image signals are interpolated between the frames and are sequentially displayed.

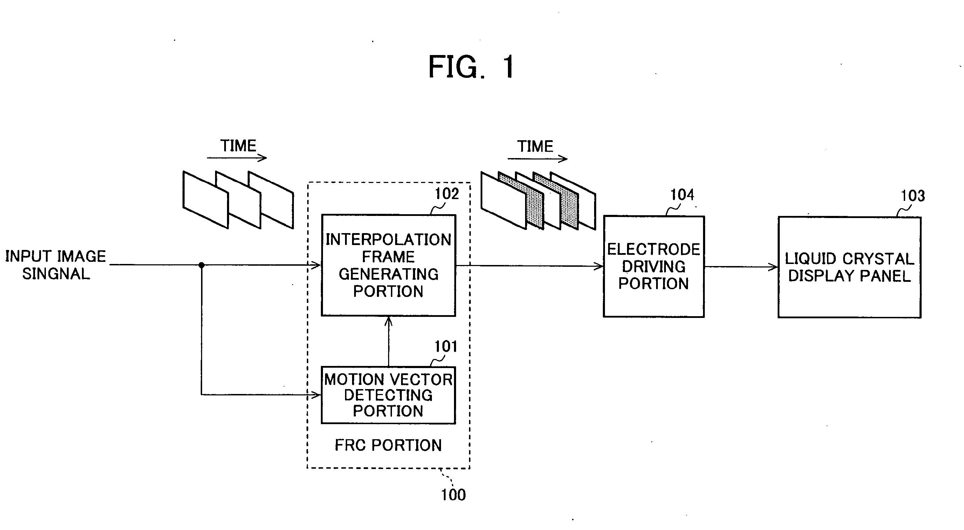

Fig. 1 is a block diagram of a schematic configuration of an FRC drive display circuit in a conventional liquid crystal displaying device and, in Fig. 1, the FRC drive display circuit includes an FRC portion 100 that converts the number of frames of the input image signal by interpolating the image signals to which the motion compensation processing has been given between frames of the input video signal, an active-matrix liquid crystal display panel 103 having a liquid crystal layer and an electrode for applying the scan signal and the data signal to the liquid crystal layer, and an electrode driving portion 104 for driving a scan electrode and a data electrode of the liquid crystal display panel 103 based on the image signal subjected to the frame rate conversion by the FRC portion 100.

The FRC portion 100 includes a motion vector detecting portion 101 that detects motion vector information from the input image signal and an interpolation frame generating portion 102 that generates interpolation frames based on the motion vector information acquired by the motion vector detecting portion 101.

In the above configuration, for example, the motion vector detecting portion 101 may obtain the motion vector information with the use of a block matching method and a gradient method described later or if the motion vector information is included in the input image signal in some form, this information may be utilized. For example, the image data compression-encoded with the use of the MPEG format includes motion vector information of a moving image calculated at the time of encoding, and this motion vector information may be acquired.

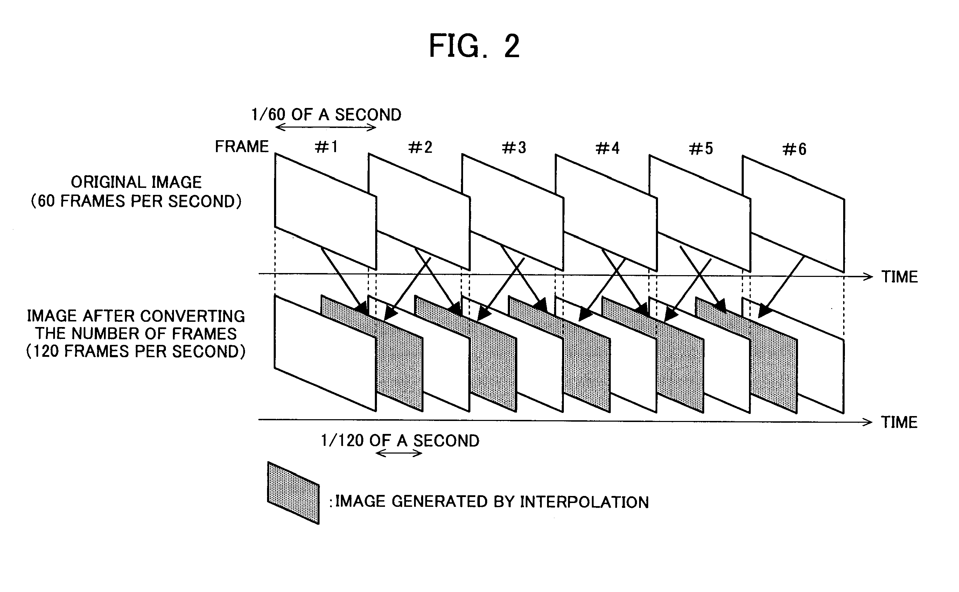

Fig. 2 is a diagram for explaining a frame rate conversion processing by the conventional FRC drive display circuit shown in Fig. 1. The FRC portion 100 generates interpolation frames (gray-colored images in Fig. 2) between frames with the motion compensation processing using the motion vector information output from the motion vector detecting portion 101 and sequentially outputs the generated interpolation signals along with the input frame signals to perform processing of converting the frame rate of the input image signal from 60 frames per second (60 Hz) to 120 frames per second (120 Hz).

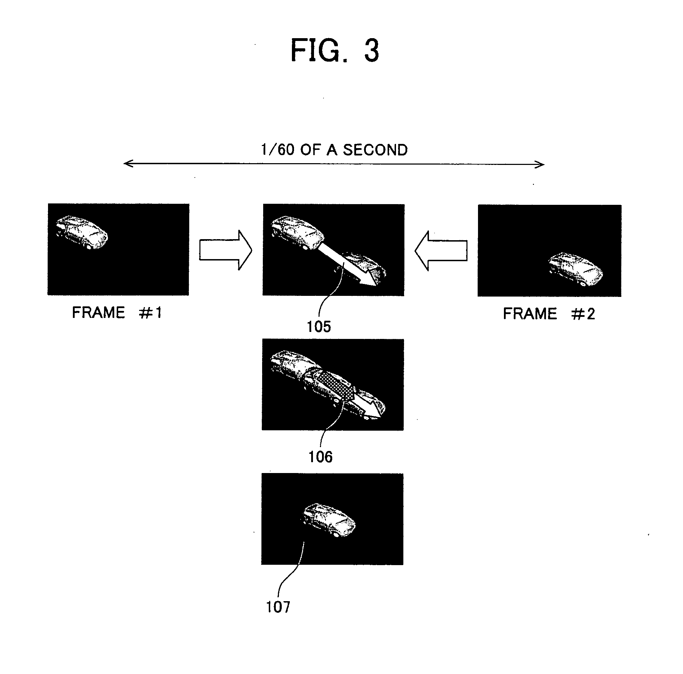

Fig. 3 is a diagram for explaining an interpolation frame generation processing of the motion vector detecting portion 101 and the interpolation frame generating portion 102. The motion vector detecting portion 101 uses the gradient method to detect a motion vector 105 from, for example, a frame #1 and a frame #2 shown in Fig. 3. The motion vector detecting portion 101 obtains the motion vector 105 by measuring a direction and an amount of movement in 1/60 of a second between the frame #1 and the frame #2. The interpolation frame generating portion 102 then uses the obtained motion vector 105 to allocate an interpolation vector 106 between the frame #1 and the frame #2. An interpolation frame 107 is generated by moving an object (in this case, an automobile) from a position of the frame #1 to a position after 1/120 of a second based on the interpolation vector 106.

By performing the motion-compensated frame interpolation processing with the use of the motion vector information to increase a display frame frequency in this way, the display state of the LCD (the hold display mode) can be made closer to the display state of the CRT (the impulse display mode) and deterioration of an image can be improved which is due to the motion blur generated when displaying a moving image.

In the motion-compensated frame interpolation processing, it is essential to detect the motion vectors for performing the motion compensation. For example, the block matching method and the gradient method are proposed as representative techniques for the motion vector detection. In the gradient method, the motion vector is detected for each pixel or small block between two consecutive frames and thereby each pixel or small block of the interpolation frame between two frames is interpolated. That is, an image at an arbitrary position between two frames is moved to an accurate position to be interpolated so that the number of frames is converted.

### DISCLOSURE OF THE INVENTION

### PROBLEMS TO BE SOLVED BY THE INVENTION

Meanwhile, in television video images to be broadcasted, there exists a video image in which characters such as a program logo and telop are superimposed on a video image taken by a video camera and a video image in which computer graphics (CG) and animations, etc., are combined. Compared to natural video image signals taken by a video camera in this manner, the ones that are edited in a broadcasting station are referred to as composite video image signals.
Furthermore, for example, also in a content video image such as a movie stored in a DVD (Digital Versatile Disc), there exists a video image in which characters and a CG image, etc., are combined by a content creator.

In the composite video image signal as described above, when a natural video image signal taken by a video camera or a first video image signal according to a natural video image signal that is created by a realistic CG processing, is combined with a second video image signal such as a character image like a program logo or a CG composite image, video images having different characteristics between the first video image signal and the second video image signal are mixed in some cases.

For example, in a video image where the second video image signal such as telop moving to the opposite direction to the first video image signal, is combined on the first video image signal such as a natural video image signal panning to a fixed direction, video images having completely opposite motions are mixed. When a video image signal processing like FRC is given to such a composite video image signal, errors occur in detection of motion vector information between previous and subsequent frames by the FRC in and around an area of telop that is the second video image signal, thus causing deterioration of an image such as distortion of characters of telop or the peripheral background image.

Further, in a video image where the second video image signal such as a static program logo is combined on the first video image signal such as a natural video image signal panning to a fixed direction, the natural video image signal becomes a video image passing behind the program logo while the program logo is static so that images having different motions are mixed. When a video image signal processing like the FRC is given to such a composite video image signal, errors occur in detection of motion vector information between previous and subsequent frames by the FRC in and around the program logo that is the second video image signal, thus causing deterioration of an image such as distortion of the program logo or the peripheral background image. In addition, there exist many translucently combined program logos, and since luminance of the translucently combined program logo itself is varied depending on the background image, it becomes more difficult to detect the motion vectors.

Description has been given taking the FRC processing as an example as a conventional technology, general video image signal processings on the side of an image receiving device include an I/P (Interlace/Progressive) conversion processing and an edge enhancement processing (outline enhancement processing). The following problems also arise in the case of using these video image signal processings.

The I/P conversion processing, for example, is the processing for converting an interlace scan signal broadcasted on TV into a progressive scan signal. In recent years, a motion-compensated I/P conversion technology is proposed in order to improve moving image quality. This technology, in the same manner as the FRC processing, performs motion detection to give the conversion processing in accordance with the motion, and similarly to the problem in the FRC processing described above, when the motion-compensated I/P conversion processing is performed to a video image in which the second image signal such as telop is combined, errors occur in detection of motion vector information between previous and subsequent frames, thus causing deterioration of an image such as generation of combing noise in characters of telop or the peripheral background image.

The edge enhancement processing is to improve sharpness of the image, for example, by enhancing high frequency components of video image signals broadcasted on TV or expanding a frequency range of the video image signals to be enhanced, and the edge enhancement processing with the same intensity is generally performed for the entire display screen.
In a video image where the first video image signal such as a natural video image signal shot by a camera is combined with the second video image signal such as a CG image, the natural video image by the first video image signal has soft outlines while the CG image by the second video image signal has sharp outlines, thus video images having different characteristics are mixed. When the edge enhancement processing is given to such a composite video image, it is possible to improve a contrast by giving the edge enhancement processing to the first video image signal (natural video image signal), but when the same processing is given to the second video image signal (CG image signal), deterioration of an image occurs in an edge part of the CG image since the processing of further enhancing the edge is performed for the CG image whose edge has been already sharp.

Japanese Laid-Open Patent Publication No. 2004-120757 proposes the one in which, when an additional image such as an on-screen display (OSD) image is superimposed on an image of video image signals received on the side of the receiving device, the FRC processing and the I/P conversion processing are performed to the superimposed image and the peripheral image area without giving motion compensation thereto. This is to perform the FRC processing and the I/P conversion processing with a different method for each image area by using a control signal that instructs an image area on which additional image data generated by an OSD generating portion is superimposed.

That is, in the one described in Japanese Laid-Open Patent Publication No. 2004-120757, when the additional image is generated by the receiving device to be superimposed on the received video image, an image area on which the additional image is superimposed can be found so that it becomes possible to use an appropriate video image signal processing for each image area. However, as described above, with respect to the video image transmitted after the second video image signal is superimposed on the first video image signal in the broadcasting station, the position at which the second video image signal is superimposed on the side of the receiving device and the type and the position of the second video image signal can not be found so that it is impossible to give an appropriate video image signal processing for each image area by applying a technology of Japanese Laid-Open Patent Publication No. 2004-120757.

Moreover, Japanese Laid-Open Patent Publication No. 2002-15327 proposes the one that determines whether the image type of image data that is input to an image processing device is an artificial image or a natural image for each pixel to select an appropriate image interpolation processing or image enhancement processing by using the determination result. Based on consistency (correlation) between a value of image data of a specified pixel and a value of image data of a pixel in the vicinity, whether the image data of the specified pixel is computer image data or natural image data is determined, and according to a result thereof, an image interpolation processing and an image enhancement processing that are appropriate for the computer image, and an image interpolation processing and an image enhancement processing that are appropriate for the natural image are selected.

However, also in Japanese Laid-Open Patent Publication No. 2002-15327, as described as "A smooth part of an image in a natural image (a sky and a wall, etc., for example) is partially determined as an artificial image area in many cases. Therefore, the part to be a natural image is determined as the artificial image", it is extremely difficult to determine the image type accurately, and although a method to solve this problem is also disclosed, it is described as "Whether or not each pixel is in an edge area is automatically determined and when it is determined being in the edge area, a threshold value for determining the level of correlation is lowered to make it difficult to be determined as the natural image", that is, the edge area in the natural image is likely to be determined as an artificial image erroneously, so that it is found that errors of the automatic determination still can not be prevented completely.

As described above, in the case of the one described in Japanese Laid-Open Patent Publication No. 2002-15327, errors occur in the automatic determination of the image type in some cases, resulting that there is a possibility that an inappropriate video image signal processing is selected. Furthermore, since a complicated configuration is required to perform the automatic determination of the image type, there is also a problem of causing an increase of a mounting cost and power consumption.

The present invention was conceived in view of the above circumstances, and the object thereof is:
to make it possible to prevent deterioration of an image by a second video image signal and the peripheral image and generate a video image with higher quality by transmitting or recording a first video image signal with video image composite information in combining the second video image signal with the first video image signal (a position, a size, and speed of the composite image, etc.,) added thereto and by controlling the video image signal processing to a composite video image signal on the side of a receiving device or a reproducing device in accordance with the video image composite information; and
to make it possible to prevent deterioration of an image by the second video image signal and the peripheral image and generate a video image with higher quality by transmitting or recording the first video image signal with video image composite information in combining the second video image signal with the first video image signal (a position, a size, and speed of the composite image, etc.,) and the second video image signal added thereto and by controlling the respective video image signal processing to each of the first video image signal and the second video image signal individually on the side of the receiving device or the reproducing device in accordance with the video image composite information to combine with the video image signal to which each processing has been given.

### MEANS FOR SOLVING THE PROBLEMS

A first invention of the present application is a video image transmitting device for transmitting a composite video image signal in which a second video image signal that is different from a first video image signal is superimposed on the first video image signal, wherein information concerning the second video image signal that is superimposed on the first video image signal is added to the composite video image signal and transmitted.

A second invention of the present application is the video image transmitting device, wherein the information concerning the second video image signal includes information indicating a position of the second video image signal superimposed on the first video image signal.

A third invention of the present application is the video image transmitting device, wherein the information concerning the second video image signal includes information indicating an area of the second video image signal superimposed on the first video image signal.

A fourth invention of the present application is the video image transmitting device, wherein the information concerning the second video image signal includes information indicating moving speed of a video image represented by the second video image signal superimposed on the first video image signal.

A fifth invention of the present application is the video image transmitting device, wherein the information concerning the second video image signal includes information indicating sharpness of an edge of the video image represented by the second video image signal superimposed on the first video image signal.

A sixth invention of the present application is the video image transmitting device, wherein the information concerning the second video image signal includes information indicating a type of the video image represented by the second video image signal superimposed on the first video image signal.

A seventh invention of the present application is a video image receiving device for receiving a composite video image signal in which a second video image signal that is different from a first video image signal is superimposed on the first video image signal, and information concerning the second video image signal superimposed on the first video image signal, wherein a video image signal processing means is included for performing video image signal processing, that is different from the one performed to other areas, to an area on which the second video image signal is superimposed using the information concerning the second video image signal.

An eighth invention of the present application is the video image receiving device, wherein the video image signal processing means includes a frame rate converting portion using motion compensation processing, and the frame rate converting portion performs motion compensation processing, that is different from the one performed to other areas, to the area on which the second video image signal is superimposed using the information concerning the second video image signal.

A ninth invention of the present application is the video image receiving device, wherein the video image signal processing means includes an interlace/progressive converting portion using motion compensation processing, and the interlace/progressive converting portion performs motion compensation processing, that is different from the one performed to other areas, to the area on which the second video image signal is superimposed using the information concerning the second video image signal.

A tenth invention of the present application is the video image receiving device, wherein when the information concerning the second video image signal indicates moving speed of the video image represented by the second video image signal is at zero, an intensity of the motion compensation processing to the area on which the second video image signal is superimposed is set to be zero.

An eleventh invention of the present application is the video image receiving device, wherein filtering processing is given to a boundary part between the area on which the second video image signal is superimposed and other areas.

A twelfth invention of the present application is the video image receiving device, wherein the video image signal processing means includes a motion vector detecting portion for dividing a frame or a field of an input image signal into a plurality of blocks of a predetermined size that is determined in advance, and detecting a motion vector showing an amount and a direction of motion between input image signals which are apart from each other by at least one or more frames or fields for each block, and the motion vector detecting portion includes: a storage portion for accumulating at least one frame or one field of a motion vector detected for each block; an initial deflection vector selecting portion for selecting a motion vector whose value is the most suitable for the motion of a detected block as an initial deflection vector of the detected block, from a group of candidate vectors read the motion vectors accumulated out of the storage portion; and a motion vector calculating portion for obtaining and outputting a motion vector of a detected block by performing a predetermined calculation using the initial deflection vector selected by the initial deflection vector selecting portion as a starting point, and accumulating the obtained vector in the storage portion.

A thirteenth invention of the present application is the video image receiving device, wherein moving speed of the video image represented by the second video image signal, which is indicated by the information concerning the second video image signal is added to the initial deflection vector selecting portion as one of the group of candidate vectors, for the area on which the second video image signal is superimposed.

A fourteenth invention of the present application is the video image receiving device, wherein the initial deflection vector selecting portion performs selecting processing of an initial deflection vector by performing weighting so that the added candidate vector is likely to be selected.

A fifteenth invention of the present application is the video image receiving device, wherein the motion vector calculating portion changes a calculating method for the area on which the second video image signal is superimposed in order to obtain a vector of which direction is the same as the moving direction of the video image represented by the second video image signal indicated by the information concerning the second video image signal.

A sixteenth invention of the present application is the video image receiving device, wherein the video image signal processing means includes edge enhancement portion for performing an edge enhancement processing, and the edge enhancement portion performs the edge enhancement processing, that is different from the one performed to other areas, for the area on which the second video image signal is superimposed using the information concerning the second video image signal.

A seventeenth invention of the present application is the video image receiving device, wherein an intensity of the edge enhancement processing for the area on which the second video image signal is superimposed, is varied from an intensity of the edge enhancement processing for other areas.

An eighteenth invention of the present application is the video image receiving device, wherein the intensity of the edge enhancement processing is set to be zero for the area on which the second video image signal is superimposed.

A nineteenth invention of the present application is the video image receiving device, wherein the information concerning the second video image signal includes information indicating sharpness of an edge of the video image represented by the second video image signal superimposed on the first video image signal.

A twentieth invention of the present application is the video image receiving device, wherein when the edge of the video image represented by the second video image signal is sharp, the intensity of the edge enhancement processing is reduced, and when the edge of the video image represented by the second video image signal is soft, the intensity of the edge enhancement processing is increased.

A twenty-first invention of the present application is the video image receiving device, wherein the information concerning the second video image signal includes information indicating a type of the video image represented by the second video image signal superimposed on the first video image signal.

A twenty-second invention of the present application is the video image receiving device, wherein when the type of the video image represented by the second video image signal is a computer graphics video image, the intensity of the edge enhancement processing is reduced, and when the type of the video image represented by the second video image signal is a natural video image, the intensity of the edge enhancement processing is increased.

A twenty-third invention of the present application is a video image displaying device comprising the video image receiving device as defined in any one of the seventh to twenty-second inventions.

A twenty-fourth invention of the present application is a video image transmitting device for transmitting a first video image signal and a second video image signal to be superimposed on the first video image signal, wherein information concerning the second video image signal to be superimposed on the first video image signal is added to the first video image signal and/or the second video image signal and transmitted.

A twenty-fifth invention of the present application is the video image transmitting device, wherein the information concerning the second video image signal includes information indicating a position of the second video image signal to be superimposed on the first video image signal.

A twenty-sixth invention of the present application is the video image transmitting device, wherein the information concerning the second video image signal includes information indicating an area of the second video image signal to be superimposed on the first video image signal.

A twenty-seventh invention of the present application is the video image transmitting device, wherein the information concerning the second video image signal includes information indicating moving speed of a video image represented by the second video image signal to be superimposed on the first video image signal.

A twenty-eighth invention of the present application is the video image transmitting device, wherein the information concerning the second video image signal includes information indicating sharpness of an edge of the video image represented by the second video image signal to be superimposed on the first video image signal.

A twenty-ninth invention of the present application is the video image transmitting device, wherein the information concerning the second video image signal includes information indicating a type of the video image represented by the second video image signal to be superimposed on the first video image signal.

A thirtieth invention of the present application is a video image receiving device for receiving a first video image signal, a second video image signal to be superimposed on the first video image signal, and information concerning the second video image signal to be superimposed on the first video image signal, comprising: a first video image signal processing means for performing the predetermined video image signal processing for the first video image signal; a second video image signal processing means for performing the predetermined video image signal processing for the second video image signal using the information concerning the second video image signal; and a video image combining processing means for superimposing the first video image signal to which the video image signal processing has been given by the first video image signal processing means on the second video image signal to which the video image signal processing has been given by the second video image signal processing means, using the information concerning the second video image signal.

A thirty-first invention of the present application is the video image receiving device, wherein the second video image signal processing means includes a frame rate converting portion using motion compensation processing, and the frame rate converting portion controls the motion compensation processing to the second video image signal using the information concerning the second video image signal.

A thirty-second invention of the present application is the video image receiving device, wherein the second video image signal processing means includes an interlace/progressive converting portion using motion compensation processing, and the interlace/progressive converting portion controls the motion compensation processing to the second video image signal using the information concerning the second video image signal.

A thirty-third invention of the present application is the video image receiving device, wherein the second video image signal processing means includes a motion vector detecting portion for dividing a frame or a field of an input image signal into a plurality of blocks of a predetermined size that is determined in advance, and detecting a motion vector showing an amount and a direction of motion between input image signals that are apart from each other by at least one or more frames or fields for each block, and the motion vector detecting portion includes: a storage portion for accumulating a motion vector detected for each block of at least one frame or one field; an initial deflection vector selecting portion for selecting a motion vector whose value is the most suitable for the motion of a detected block as an initial deflection vector of the detected block, from a group of candidate vectors read the motion vectors accumulated out of the storage portion; and a motion vector calculating portion for obtaining and outputting a motion vector of a detected block by performing a predetermined calculation using the initial deflection vector selected by the initial deflection vector selecting portion as a starting point, and accumulating the obtained vector in the storage portion.

A thirty-fourth invention of the present application is the video image receiving device, wherein moving speed of a video image represented by the second video image signal, which is indicated by the information concerning the second video image signal is added to the initial deflection vector selecting portion as one of the group of candidate vectors.

A thirty-fifth invention of the present application is the video image receiving device, wherein the initial deflection vector selecting portion performs selecting processing of an initial deflection vector by performing weighting so that the added candidate vector is likely to be selected.

A thirty-sixth invention of the present application is the video image receiving device, wherein the motion vector calculating portion changes a calculating method in order to obtain a vector of which direction is the same as a moving direction of the video image represented by the second video image signal indicated by the information concerning the second video image signal.

A thirty-seventh invention of the present application is the video image receiving device, wherein the second video image signal processing means includes an edge enhancement portion for performing edge enhancement processing, and the edge enhancement portion performs the edge enhancement processing to the second video image signal using the information concerning the second video image signal.

A thirty-eighth invention of the present application is the video image receiving device, wherein an intensity of the edge enhancement processing is controlled to the second video image signal using the information concerning the second video image signal.

A thirty-ninth invention of the present application is the video image receiving device, wherein the intensity of the edge enhancement processing to the second video image signal is set to be zero.

A fortieth invention of the present application is the video image receiving device, wherein the information concerning the second video image signal includes information indicating sharpness of an edge of the video image represented by the second video image signal to be superimposed on the first video image signal.

A forty-first invention of the present application is the video image receiving device, wherein when the edge of the video image represented by the second video image signal is sharp, the intensity of the edge enhancement processing is reduced, and when the edge of the video image represented by the second video image signal is soft, the intensity of the edge enhancement processing is increased.

A forty-second invention of the present application is the video image receiving device, wherein the information concerning the second video image signal includes information indicating a type of the video image represented by the second video image signal to be superimposed on the first video image signal.

A forty-third invention of the present application is the video image receiving device, wherein when the type of the video image represented by the second video image signal is a computer graphics video image, the intensity of the edge enhancement processing is reduced, and when the type of the video image represented by the second video image signal is a natural video image, the intensity of the edge enhancement processing is increased.

A forty-fourth invention of the present application is a video image displaying device comprising the video image receiving device as defined in any one of the thirtieth to the forty-third invention.

A forty-fifth invention of the present application is a video image recording device for recording a composite video image signal, in which a second video image signal that is different from a first video image signal is superimposed on the first video image signal, on an information medium, wherein information concerning the second video image signal that is superimposed on the first video image signal is added to the composite video image signal and recorded.

A forty-sixth invention of the present application is a video image reproducing device for reproducing a composite video image signal, in which a second video image signal that is different from a first video image signal is superimposed on the first video image signal, and information concerning the second video image signal that is superimposed on the first video image signal, from an information medium, wherein a video image signal processing means is included for performing video image signal processing, that is different from the one performed to other areas, to an area on which the second video image signal is superimposed using the information concerning the second video image signal.

A forty-seventh invention of the present application is a video image recording device for recording a first video image signal and a second video image signal to be superimposed on the first video image signal in an information medium, wherein information concerning the second video image signal to be superimposed on the first video image signal is added to the first video image signal and/or the second video image signal and recorded.

A forty-eighth invention of the present application is a video image reproducing device for reproducing a first video image signal, a second video image signal to be superimposed on the first video image signal, and information concerning the second video image signal to be superimposed on the first video image signal from an information medium, comprising: a first video image signal processing means for performing the predetermined video image signal processing for the first video image signal; a second video image signal processing means for performing the predetermined video image signal processing for the second video image signal using the information concerning the second video image signal; and a video image combining processing means for superimposing the first video image signal to which the video image signal processing has been given by the first video image signal processing means on the second video image signal to which the video image signal processing has been given by the second video image signal processing means using the information concerning the second video image signal.

### EFFECTS OF THE INVENTION

According to the present invention, in the case of receiving or reproducing a composite video image signal in which a second video image signal that is different from a first video image signal is superimposed on the first video image signal, it is possible to prevent deterioration of an image in and around an area of the second video image signal due to the video image signal processing and generate a video image with higher quality by performing video image signal processing that is different from the one performed to other areas to an area on which the second video image signal is superimposed by using information concerning the second video image signal.

Furthermore, in the case of receiving or reproducing a first video image signal, a second video image signal to be superimposed on the first video image signal, and information concerning the second video image signal to be superimposed on the first video image signal, it is possible to prevent deterioration of an image in and around an area of the second video image signal due to the video image signal processing and generate a video image with higher quality by performing the predetermined video image signal processing to the first video image signal and performing the predetermined video image signal processing for the second video image signal by using the information concerning the second video image signal, and superimposing the video image signals for which each video image signal processing has been performed by using the information concerning the second video image signal.

### BRIEF DESCRIPTION OF DRAWINGS

[Fig. 1] Fig. 1 is a block diagram of a schematic configuration of an FRC drive display circuit in a conventional liquid crystal displaying device.
[Fig. 2] Fig. 2 is a diagram for explaining frame rate conversion processing by the conventional FRC drive display circuit shown in Fig. 1.
[Fig. 3] Fig. 3 is a diagram for explaining interpolation frame generating processing of a motion vector detecting portion and an interpolation frame generating portion.
[Fig. 4] Fig. 4 is a functional block diagram of an exemplary schematic configuration of a video image transmitting device according to a first embodiment of the present invention.
[Fig. 5] Fig. 5 is a functional block diagram of an exemplary schematic configuration of a video image receiving device according to the first embodiment of the present invention.
[Fig. 6] Fig. 6 is a functional block diagram of an exemplary schematic configuration of a video image transmitting device according to a second embodiment of the present invention.
[Fig. 7] Fig. 7 is a functional block diagram of an exemplary schematic configuration of a video image receiving device according to the second embodiment of the present invention.

### EXPLANATIONS OF REFERENCE NUMERALS

100...frame rate converting (FRC) portion; 101...motion vector detecting portion; 102...interpolation frame generating portion; 103...liquid crystal display panel; 104...electrode driving portion; 105...motion vector; 106...interpolation vector; 107...interpolation frame; 1...video image transmitting device; 2...editing device; 3...video image encoding processing portion; 4...video image composite information encoding processing portion; 5...multiplexing processing portion; 6...transmitting portion; 11...video image receiving device; 12...receiving portion; 13...multiplexed data separating processing portion; 14...video image decoding processing portion; 15...video image composite information decoding processing portion; 16...video image signal processing portion; 17...display portion; 21...video image transmitting device; 23A...video image encoding processing portion (1); 23B...video image encoding processing portion (2); 25...multiplexing processing portion; 31...video image receiving device; 33...multiplexed data separating processing portion; 34A...video image decoding processing portion (1); 34B...video image decoding processing portion (2); 36A...video image signal processing portion (1) ; 36B...video image signal processing portion (2); and 38...video image combining processing portion.

### PREFERRED EMBODIMENTS OF THE INVENTION

A preferred embodiment of a video image transmitting device and a video image receiving device of the present invention will be described in detail below. Although the present invention is applicable to either field signals and interpolation field signals or frame signals and interpolation frame signals, the frame signals and the interpolation frame signals will be described as a representative example since both (field and frame) are in a similar relationship with each other.

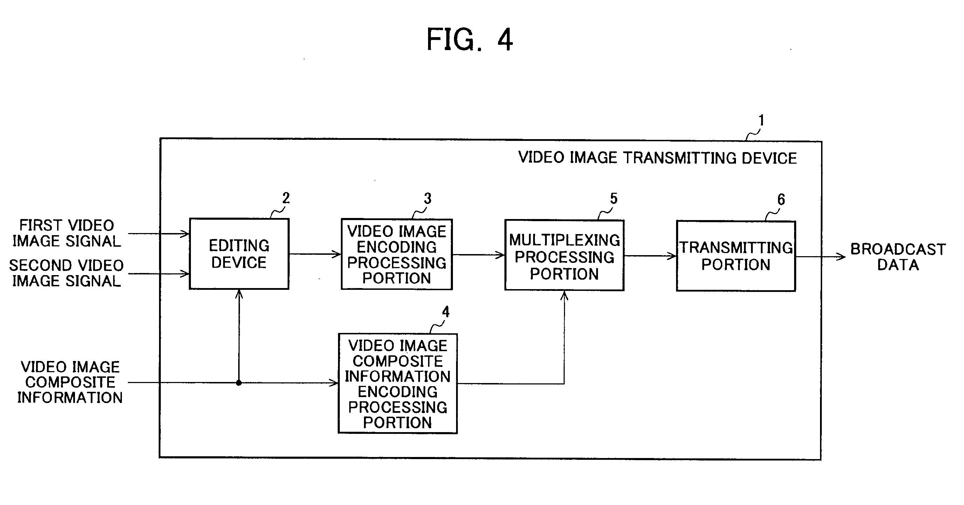

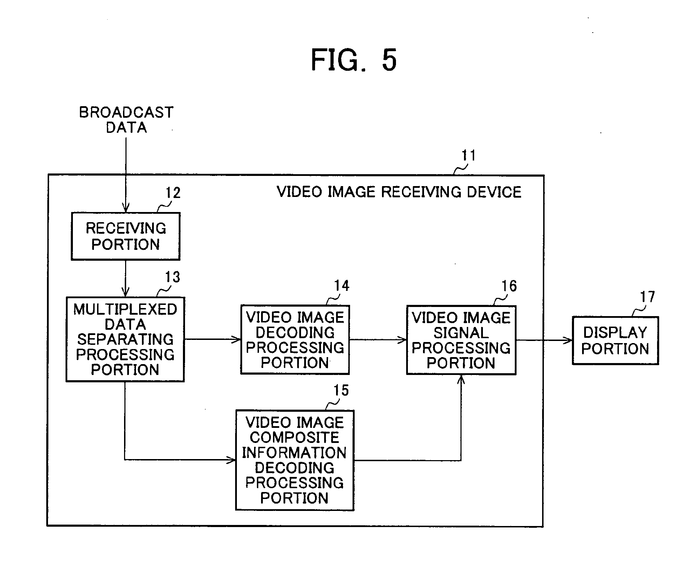

First, a video image transmitting device and a video image receiving device according to a first embodiment of the present invention will be described with reference to Figs. 4 and 5.
Fig. 4 is a block diagram of an exemplary schematic configuration of a video image transmitting device according to the present embodiment. A first video image signal, a second video image signal, and video image composite information that is information concerning the second video image signal are input to a video image transmitting device 1. The first video image signal is a natural video image signal taken by a video camera, for example. The second video image signal is a video image signal that represents a video image to be superimposed and combined on the first video image signal, such as a program logo, telop, and a CG character. The above video image composite information is thought to include the following information.

(1) Information indicating a position where the second video image signal is superimposed on the first video image signal:
   When a resolution of the first video image signal is 1920 pixels in width and 1080 pixels in length, a resolution of the second video image signal is 200 pixels in width and 100 pixels in length, and superimposing is performed such that the far upper left pixel in the second video image signal is at a position separated by x pixel from the far upper left and y pixel from the top in the first video image signal, for example, a set of numerical values (x, y) may be the information indicating a position where the second video image signal is superimposed on the first video image signal.

(2) Information indicating an area of the second video image signal:
   When the resolution of the second video image signal is 180 pixels in width and 150 pixels in length, for example, the entire area of the 180 x 150 pixels may be the area of the second video image signal.
   Alternatively, the case where the resolution of the second video image signal is 180 pixels in width and 150 pixels in length and characters are displayed thereon is thought, for example. A map of 180 pixels in width and 150 pixels in length where a pixel in which a character exists is 1 and a pixel in which no character exists is 0, is generated and this may be the information indicating an area of the second video image signal. Furthermore, transmittance may be set in the map not as a map with two values 0 and 1 but, for example, as the map with 255 tones.

(3) Information indicating moving speed of a video image represented by the second video image signal:
   For example, considering the case where the resolution of the first video image signal is 1920 pixels in width and 1080 pixels in length, the resolution of the second video image signal is 1920 pixels in width and 200 pixels in length, and a video image represented by the second video image signal is an image in which characters in each frame move in the left direction at speed of p-pixel/frame and disappear at the left end of a screen and new characters appear from the right end of the screen, that is, so-called telop, and then, although the position where the second video image signal is superimposed on the first video image signal is the same for each frame, a video image represented by the second video image signal is characters that move in the left direction at constant speed of p-pixel/frame. Accordingly, it is possible to make the moving speed of the characters to be the information indicating moving speed of the video image represented by the second video image signal. More generally, when the video image represented by the second video image signal moves at speed of p-pixel/frame in the horizontal direction and at speed of q-pixel/frame in the vertical direction, it is possible to make a set of numerical values (p, q) to be the information indicating the moving speed of the video image represented by the second video image signal.

(4) Information indicating sharpness of an edge of a video image represented by the second video image signal:
   For example, an average value of luminance change amounts per pixel in an edge part of a video image represented by the second video image signal is usable as information indicating the sharpness of the edge of the video image represented by the second video image signal.

(5) Information indicating a type of a video image represented by the second video image signal:
   The second video image signal is the information indicating the type of either a natural video image signal that represents a natural video image taken by a video camera, for example, or an artificial video image signal such as a CG image signal or a character image signal.

In accordance with video image composite information that includes some of the above-described information, the second video image signal is superimposed on the first video image signal and a composite video image signal is output in an editing device 2. The composite video image signal is encoded by a video image encoding processing portion 3 and the video image composite information is encoded by a video image composite information encoding processing portion 4. A multiplexing processing portion 5 multiplexes the two types of data to generate broadcast data. A transmitting portion 6 transmits the broadcast data on broadcast radio waves. The composite video image signal output from the editing device 2 is similar to the video image data in conventional broadcasting. One of the characteristics of the present invention is to transmit the composite video image signal with the video image composite information added thereto.

Note that, the present embodiment is configured to multiplex and send each data stream of the video image data and the video image composite information to which a compression processing has been given, but may also be applied to the one to transmit the composite video image signal and the video image composite information without compressing. Furthermore, it is also possible that the video image data is sent by a payload of Transport Stream packets (TSP) prescribed by MPEG 2 (Moving Picture Experts Group 2)-Systems, for example, and the video image composite information is sent by an expansion header (adaptation field) or is sent by embedding in the payload configured by the video image data.

Fig. 5 is a block diagram of an exemplary schematic configuration of a video image receiving device according to the present embodiment. A video image receiving device 11 receives broadcast data transmitted from the video image transmitting device 1 at a receiving portion 12. The received broadcast data is separated into the original two types of data by a multiplexed data separating processing portion 13. Since the data is compressed data, the composite video image signal and the video image composite information are decoded by a video image decoding processing portion 14 and a video image composite information decoding processing portion 15, respectively. A video image signal processing portion 16 performs the predetermined video image signal processing to the decoded video image signal. At this time, for an area of the second video image signal superimposed on the first video image signal in transmitting the video image, the processing that is different from the one performed to other areas is performed with the use of the decoded video image composite information.

For example, the video image signal processing portion 16 detects motion vector information from an input video image signal, and includes an FRC processing portion that performs frame rate conversion processing from 60 Hz to 120 Hz by giving motion compensation processing with the use of the motion vector information. Here, when a static program logo (with speed of zero) and telop moving at constant speed are superimposed as the second video image signal on the input video image signal, and the information indicating a position and an area of the program logo or a position, an area, and moving speed of the telop, etc., are added as the video image composite information, the video image signal processing portion 16 regards the area on which the program log is superimposed as the static area to set the intensity of the motion compensation processing to zero, that is, performs no motion compensation processing (makes ineffective). Furthermore, with respect to the area on which the telop is superimposed, the motion compensation processing is performed by allocating a motion vector corresponding to the moving speed of the telop.

In the FRC processing from 60 Hz to 120 Hz, a motion vector between frames of the input video image signal is detected and based on the motion vector, an interpolation frame is generated at an intermediate position between the frames of the input video image signal. The interpolation frame is cut into each interpolation block including a plurality of pixels and a single interpolation vector is allocated to each of the interpolation blocks. Then, RGB signals of input frames (a previous frame, a current frame) indicated by the interpolation vectors allocated to the interpolation blocks are extracted to generate an interpolation image signal for each pixel.

At this time, by allocating zero-vector to the interpolation block corresponding to the position where the program logo is superimposed, it is possible to generate the interpolation image signal with the motion compensation processing made ineffective, and it is possible to generate the interpolation image signal with a motion amount of the telop being motion-compensated by allocating the interpolation vector with the speed of the half of the moving speed of the telop to the interpolation block corresponding to the position and the area where the telop is superimposed.

That is, the interpolation vector that is obtained by using a detection result of the motion vector is allocated to each interpolation block for the area of the first video image signal, whereas, the interpolation vector that is obtained from the video image composite information is preferentially allocated for the area where the second video image signal is superimposed. Thereby, it becomes possible to generate an appropriate interpolation image signal in the area of the second video image signal to prevent deterioration of image quality due to deterioration of the interpolation image.

Note that, in the embodiment above, the method for allocating zero-vector to the interpolation block corresponding to the area of the program logo has been described as the method for making the motion compensation processing ineffective to the area where the program logo (static image) that is the second video image signal is superimposed, but a method for replacing a motion vector detected by a motion vector detecting portion with zero-vector, or a method for inserting, to an area where a program logo is to be superimposed in the interpolation frame, the image signal of the input frame (a previous frame or a subsequent frame) corresponding to this area or the image signal generated from the previous and subsequent input frames by performing linear interpolation processing may be used in addition. Furthermore, when weighted addition of the image signal to which the motion compensation processing has been given and the image signal to which the linear interpolation processing has been given are performed to generate the interpolation image, a method for reducing the intensity of the motion compensation processing by decreasing the weighted addition ratio of the image signal to which the motion compensation processing has been given may be used in an area of the program logo.

Furthermore, in the embodiment above, when the interpolation vector is set to zero-vector so as to make the motion compensation processing ineffective to the area of the second video image signal serving as a static area, since a rapid change of the interpolation vector occurs in a boundary part between the area where the motion compensation processing is made ineffective and other areas to which the motion compensation processing has been given, existence or non-existence of the motion compensation processing may clearly appear in the image to be conspicuous.

Similarly, also when the motion vector corresponding to the moving speed of the telop is allocated uniformly to the area of the second video image signal serving as the area of the telop in which characters move at predetermined speed, the size and the direction of the interpolation vector may change rapidly in a boundary part between the area to which the motion compensation processing has been given with the use of the motion vector corresponding to the moving speed of the telop and other areas to which the motion compensation processing has been given with the use of the motion vector detected by motion vector detecting processing, and that may appear in the image to be conspicuous. Furthermore, the same problem also occurs when the area of the second video image signal serving as a static area is superimposed on the area of the second video image signal as the area of the moving telop.

In order to reduce those, it is desirable that filtering processing such as applying a low pass filter is performed to a boundary part between the area of the second video image signal and the area of the first video image signal or to a boundary part between the areas of a plurality of second video image signals, so that the boundary is prevented from being conspicuous. For example, a method for making the boundary of each area inconspicuous by applying the low pass filter to the interpolation image signal of the boundary part between each area may be used. Alternatively, by applying the low pass filter to the motion vector that is detected in the boundary part of each area or in the neighboring motion vector detection block, or to the interpolation vector that is allocated in the boundary part of each area or in the neighboring interpolation block, it is possible to change the size and direction of the vector near the boundary of each area smoothly and to make the boundary inconspicuous in the interpolation image generated with the use of the vector.

Furthermore, in the embodiment above, as the method for generating the interpolation image signal of the area where the video image of the telop is superimposed as the second video image signal, the method for allocating the vector corresponding to half the moving speed of the telop to the interpolation block corresponding to the area of the telop has been described. This is effective when character shapes of the telop can be faithfully extracted, however, if only information of a band-shaped (rectangular-like) area including the character shapes of the telop may be acquired, when the interpolation vector corresponding to half the moving speed of the telop is allocated, a background image around the characters of the telop is also dragged by the moving speed of the telop to cause deterioration of the image.

Therefore, if only the information of the band-shaped area including the character shapes of the telop may be acquired, when the motion vector detection is performed, the vector corresponding to the moving speed of the telop is added as one of candidate vectors in the motion vector detection, that is, one of options of the vector to the vector detection block corresponding to the band-shaped area of the telop. Thereby, the vector that coincides with the moving speed of the telop is likely to be selected in the vector detection block corresponding to the characters of the telop, and the vector that is in accordance with the motion of the background image can be selected in the vector detection block corresponding to the background around the characters of the telop, therefore, the image in and around the characters of the telop may be prevented from deteriorating.

To explain more specifically, the FRC processing portion is provided with a motion vector detecting portion that divides a frame of an input image signal into a plurality of blocks of a predetermined size that is determined in advance and detects a motion vector that represents the amount and the direction of the motion between input image signals that are apart from each other by at least one frame or more for each block, and the motion vector detecting portion includes a storage portion that accumulates the motion vectors detected for each block by at least one frame, an initial deflection vector selecting portion that selects a motion vector whose value is the most suitable for the motion of the detected block from a group of candidate vectors read among the motion vectors accumulated in the storage portion as an initial deflection vector of the detected block, and a motion vector calculating portion that performs a predetermined calculation using the initial deflection vector selected by the initial deflection vector selecting portion as a starting point to obtain and output the motion vector of the detected block, and accumulates it in the storage portion.

Examples of the predetermined calculation in the motion vector calculating portion include a block matching method and a gradient method. In the block matching method, the initial deflection vector is used as a starting point, around which detailed block matching is performed so that a final motion vector can be obtained. In the gradient method, calculations of the gradient method are performed using the initial deflection vector as a starting point, so that a final motion vector can be obtained. Here, with respect to the area where the second video image signal is superimposed, the moving speed of the video image represented by the second video image signal which is indicated by the information concerning the second video image signal is added as one of the group of candidate vectors to the initial deflection vector selecting portion.

The initial deflection vector selecting portion also performs weighting such that the added candidate vector is likely to be selected, and performs selecting processing of the initial deflection vector. Furthermore, the motion vector calculating portion changes the calculating method so as to obtain a vector of which direction is the same as the moving direction of the video image represented by the second video image signal which is indicated by the information concerning the second video image signal, with respect to the area where the second video image signal is superimposed.

In this manner, when the FRC processing is performed for the composite video image signal on which the program logo or the telop is superimposed as the second video image signal, it is possible to prevent deterioration of an image in and around the area of the second video image signal and to generate a video image with higher quality by giving the motion compensation processing that is suitable for each of the first and the second video image signals based on the video image composite information of the second video image signal.

Note that, although the case where the FRC processing is performed using the motion compensation processing has been described in the embodiment above as the video image signal processing in the video image signal processing portion 16, various video image signal processings such as an I/P (Interlace/Progressive) conversion processing and edge enhancement processing may be also used alternatively.

For example, when the video image signal processing portion 16 includes a motion-compensated I/P conversion processing portion, a telop image signal that is a second video image signal is superimposed on a natural video image signal that is a first video image signal, and information indicating a position, an area, and moving speed of the telop is added as the video image composite information, to the area of the first video image signal, usual motion detection is performed and progressive conversion is performed by giving the motion compensation processing in accordance with the result of the motion detection, and to the area on which the second video image signal is superimposed, progressive conversion is performed by giving the motion compensation processing based on the speed information of the telop included in the video image composite information.

In this manner, the motion compensation processing is controlled in the video image signal processing portion 16 using the video image composite information, so that the appropriate motion-compensated I/P conversion processing can be performed for each area of the video image signals and deterioration of an image due to errors of the I/P conversion processing can be prevented.

Furthermore, for example, when the video image signal processing portion 16 includes an edge enhancement processing portion, a CG image signal that is a second video image signal is superimposed on a natural video image signal that is a first video image signal, information indicating a position, an area, sharpness of an edge, and a type of an image (CG image, etc.) of the CG image is added as the video image composite information, since the image represented by the first video image signal and the image represented by the second video image signal have different sharpness of the edge (outline), the usual edge enhancement processing is performed for the first video image signal, and the intensity of the edge enhancement processing is changed in accordance with the sharpness of the edge and/or the image type information to the area on which the second video image signal is superimposed.

For example, to the area on which the second video image signal is superimposed, the intensity of the edge enhancement processing is set to be zero (edge enhancement processing is made ineffective). When the edge of the image represented by the second video image signal is sharp, the intensity of the edge enhancement processing is reduced, and when the edge of the image represented by the second video image signal is soft, the intensity of the edge enhancement processing is increased. When the type of the image represented by the second video image signal is a CG image, the intensity of the edge enhancement processing is reduced, and when the type of the image represented by the second video image signal is a natural video image, the intensity of the edge enhancement processing is increased.

For the edge enhancement processing portion, the one that enhances high frequency components of an input video image signal may be used, and when the intensity of the edge enhancement processing is reduced, the amount to enhance the high frequency components of the input video image signal is reduced or the frequency range of the input video image signal to be enhanced is reduced. On the other hand, when the intensity of the edge enhancement processing is increased, the amount to enhance the high frequency components of the input video image signal is increased or the frequency range of the input video image signal to be enhanced is expanded. When the intensity of the edge enhancement processing is set to be zero (edge enhancement processing is made ineffective), the amount to enhance the high frequency components of the input video image signal is set to be zero or the frequency range of the input video image signal to be enhanced is set to be zero.

In this manner, the edge enhancement processing is controlled in the video image signal processing portion 16 using the video image composite information, so that the appropriate sharpening processing of the image can be performed for each area of the video image signals and failure such as deterioration of image quality caused by sharpening a video image that has no need for sharpening can be prevented.

Note that, the embodiment above has been described with the program logo and the telop taken for an example of the video image represented by the second video image signal, which is also applicable to the case of a sub-screen combined in a broadcasting station (transmitting device), a video image of P in P (picture in picture), and a video image of CG animation.

Furthermore, the case where the program logo illustrated as the video image represented by the second video image signal is static (with speed of zero) has been described in the embodiment above, there is also considered the case where the program logo changes the position for each frame, that is, moves. In such a case, since the moving speed between frames can be obtained from the information about the position of the program logo for each frame, the similar processing to the processing for the telop above can be performed with the use of information about the moving speed.

As described above, in the first embodiment of the present invention, the information concerning the second video image signal that is superimposed on the first video image signal (video image composite information indicating a position and an area where the second video image signal is superimposed, and moving speed, etc.) is transmitted with the composite video image signal, and in the receiving side, the video image signal processing such as the FRC processing is appropriately controlled using the video image composite information, so that the image in and around the area on which the second video image signal is superimposed can be prevented from deteriorating.

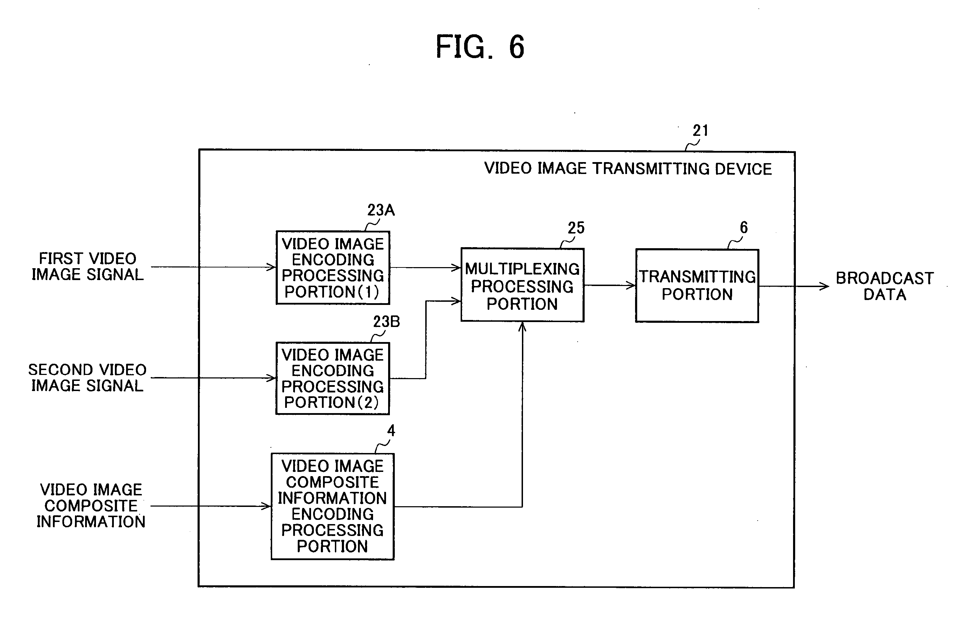

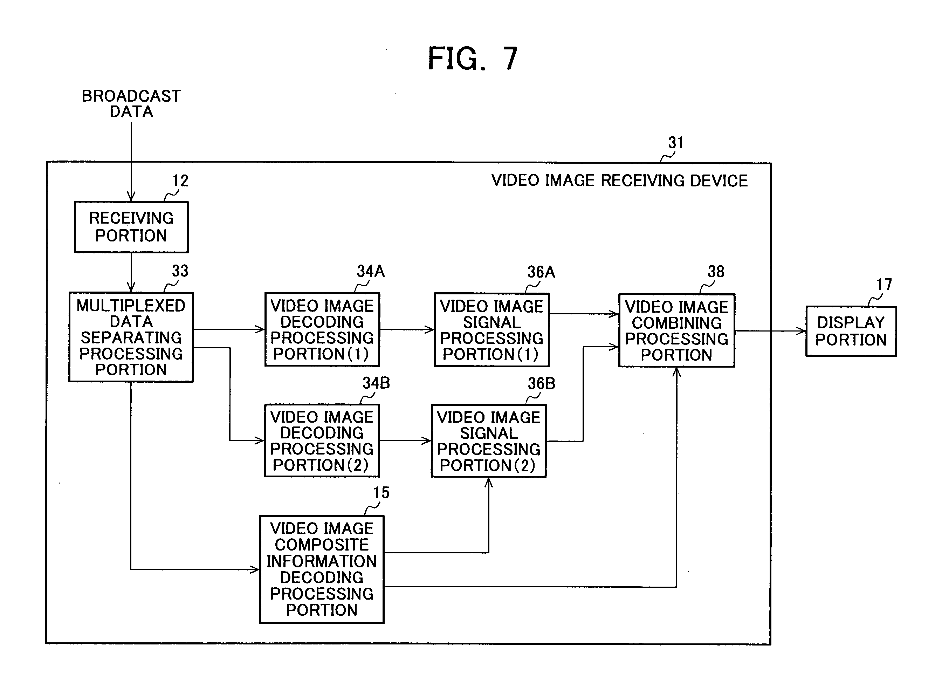

Next, although description will be given for the video image transmitting device and the video image receiving device according to a second embodiment of the present invention with reference to Figs. 6 and 7, if any part is same as in the first embodiment, same reference numeral is given thereto, with repeated description omitted.

Fig. 6 is a block diagram of an exemplary schematic configuration of the video image transmitting device according to the present embodiment. The first video image signal, the second video image signal, and the video image composite information are input to a video image transmitting device 21. The first video image signal and the second video image signal are the same as the ones described as the first embodiment, but they can be superimposed on the receiving device. The first video image signal is encoded by a video image encoding processing portion (1) 23A and the second video image signal is encoded by a video image encoding processing portion (2) 23B. That is, encoding is performed individually without superimposing the second video image signal on the first video image signal on the side of the transmitting device.

The video image composite information is the information indicating a position, an area, and moving speed, etc., when the second video image signal is superimposed on the first video image signal similarly to the one described as the first embodiment, and is encoded by a video image composite information encoding processing portion 4. The three types of data are multiplexed by a multiplexing processing portion 25 to generate broadcast data. The transmitting portion 6 transmits this broadcast data on broadcast radio waves. In this manner, the transmitted broadcast data in the present embodiment is different from the broadcast data in the first embodiment above and is transmitted with the video image composite information added thereto in a state where the first video image signal and the second video image signal are separated.

Note that, the present embodiment is configured to multiplex and send each data stream of the first and the second video image data and the video image composite information to which compression processing has been given, but may also be applied to the one to transmit the first and the second video image signals and the composite video image signal without compressing. Furthermore, it is also possible that the video image data is sent by a payload of Transport Stream packets (TSP) prescribed by MPEG 2 (Moving Picture Experts Group 2)-Systems, for example, and the video image composite information is sent by an expansion header (adaptation field) or is sent by embedding in the payload configured by the video image data. In this case, the video image composite information may be added to any of the first video image data and the second video image data.

Fig. 7 is a block diagram of an exemplary schematic configuration of the video image receiving device according to the present embodiment. A video image receiving device 31 receives broadcast data transmitted by the video image transmitting device 21 at the receiving portion 12. The received broadcast data is separated into the original three types of data by a multiplexed data separating processing portion 33. Since the data is compressed data, the first video image signal, the second video image signal, and the video image composite information are decoded by a video image decoding processing portion (1) 34A, a video image decoding processing portion (2) 34B, and a video image composite information decoding processing portion 15, respectively.

A video image signal processing portion (1) 36A performs the predetermined video image signal processing for the decoded first video image signal. A video image signal processing portion (2) 36B performs the predetermined video image signal processing for the decoded second video image signal. At this time, the video image signal processing is performed by using the information indicating a position and an area when the second video image signal is superimposed on the first video image signal, moving speed, sharpness of an edge, and a type of a video image, which is described in the video image composite information decoded by the video image composite information decoding processing portion 15. The details of this processing will be described below.

In a video image combining processing portion 38, the second video image signal subjected to the video image signal processing by the video image signal processing portion (2) 36B is superimposed on the first video image signal subjected to the video image signal processing by the video image signal processing portion (1) 36A. At this time, the superimposing processing is performed in accordance with the information indicating a position and an area, etc., when the second video image signal is superimposed on the first video image signal, which is described in the video image composite information. The composite video image signal thus generated is output on a display portion 17.

For example, the video image signal processing portion (1) 36A and the video image signal processing portion (2) 36B detect motion vector information from an input video image signal and include the FRC processing portion that performs the frame rate conversion processing from 60 Hz to 120 Hz by giving a motion compensation processing using the motion vector information. Here, when a video image signal of a program logo and telop is input as the second video image signal to be superimposed on the first video image signal, and information indicating a position and an area of the program logo, and a position, an area, and moving speed, etc., of the telop are added as the video image composite information, usual FRC processing is performed to the first video image signal, and to the second video image signal, the second video image signal corresponding to 120 Hz is generated by using moving speed information of a video image represented by the second video image signal included in the video image composite information.

At this time, since the speed of the program logo is zero, with the intensity of the motion compensation processing set to be zero, that is, without performing (by making ineffective) the motion compensation processing, an image signal of an input frame (a previous frame or a subsequent frame) is copied to generate the second video image signal corresponding to 120 Hz. Moreover, in the telop, the second video image signal corresponding to 120 Hz is generated by interpolating, between the input frames, the interpolation frame with a half amount of the moving speed motion-compensated in accordance with the moving speed.

However, when the video image represented by the second video image signal is a band-shaped rectangular area and is a video image in which telop moves in the area, the interpolation image signal may be generated by performing the motion vector detection in the area of the characters of the telop. In this case, in performing the motion vector detection, a vector corresponding to the moving speed of the telop included in the video image composite information is added as one of candidate vectors of the motion vector, that is, as one of options of the vector. Thereby, the vector that coincides with the moving speed of the telop is likely to be selected in the vector detection block corresponding to the area of the characters of the telop, and it is possible to prevent the deterioration of an image in the character part of the telop.

To explain more specifically, the FRC processing portion is provided with a motion vector detecting portion that divides a frame of an input image signal into a plurality of blocks of a predetermined size that is determined in advance and detects a motion vector that represents the amount and the direction of the motion between input image signals that are apart from each other by at least one frame or more for each block, and the motion vector detecting portion includes a storage portion that accumulates the motion vectors detected for each block by at least one frame, an initial deflection vector selecting portion that selects a motion vector whose value is the most suitable for the motion of the detected block from a group of candidate vectors read among the motion vectors accumulated in the storage portion as an initial deflection vector of the detected block, and a motion vector calculating portion that performs a predetermined calculation using the initial deflection vector selected by the initial deflection vector selecting portion as a starting point to obtain and output the motion vector of the detected block, and accumulates it in the storage portion.

Examples of the predetermined calculation in the motion vector calculating portion include a block matching method and a gradient method. In the block matching method, the initial deflection vector is used as a starting point, around which detailed block matching is performed so that a final motion vector can be obtained. In the gradient method, calculations of the gradient method are performed using the initial deflection vector as a starting point, so that a final motion vector can be obtained. Here, to the second video image signal, the moving speed of the video image represented by the second video image signal which is indicated by the information concerning the second video image signal is added to the initial deflection vector selecting portion as one of the group of candidate vectors. The initial deflection vector selecting portion also performs weighting such that the added candidate vector is likely to be selected, and performs selecting processing of the initial deflection vector. Furthermore, to the second video image signal the motion vector calculating portion changes the calculating method so as to obtain a vector of which direction is the same as the moving direction of the video image represented by the second video image signal which is indicated by the information concerning the second video image signal.

In this manner, it is possible to prevent the deterioration of an image in and around the area of the second video image signal and to generate a video image with higher quality by performing the FRC processing using the motion compensation processing that is appropriate for each of the first video image signal and the second video image signal individually and combining respective video image signals subjected to the FRC processing.

Note that, although the case where the FRC processing is performed using the motion compensation processing has been described in the embodiment above as the video image signal processing in the video image signal processing portions 36A and 36B, various video image signal processings such as an I/P (Interlace/Progressive) conversion processing and an edge enhancement processing may be also used alternatively.

For example, when the video image signal processing portion (1) 36A and the video image signal processing portion (2) 36B include a motion-compensated I/P conversion processing portion, and information indicating a position, an area, and moving speed of the telop is added to a natural video image signal that is a first video image signal and a telop image signal that is a second video image signal to be superimposed on the first video image signal as the video image composite information, to the first video image signal, usual motion detection is performed and progressive conversion is performed by giving the motion compensation processing in accordance with the result of the motion detection, and, to the second video image signal, progressive conversion is performed by giving the motion compensation processing based on the moving speed information of the telop included in the video image composite information.

In this manner, the motion compensation processing is controlled in the video image signal processing portions 36A and 36B using the video image composite information, so that the appropriate motion-compensated I/P conversion processing can be performed for each video image signal and deterioration of an image due to errors of the I/P conversion processing can be prevented.

Furthermore, for example, when the video image signal processing portion (1) 36A and the video image signal processing portion (2) 36B include an edge enhancement processing portion, information of a position, an area, sharpness of an edge, and a type of an image (CG image, etc.) of the CG image is added as the video image composite information to a natural video image signal that is a first video image signal and a CG image signal that is a second video image signal to be superimposed on the first video image signal, since the image represented by the first video image signal and the image represented by the second video image signal have different sharpness of the edge (outline), the usual edge enhancement processing is performed to the first video image signal, and the intensity of the edge enhancement processing is changed in accordance with the sharpness of the edge and/or the image type information to the second video image signal.

For example, to the second video image signal, the intensity of the edge enhancement processing is set to be zero (edge enhancement processing is made ineffective). When the edge of the image represented by the second video image signal is sharp, the intensity of the edge enhancement processing is reduced, and when the edge of the image represented by the second video image signal is soft, the intensity of the edge enhancement processing is increased. When the type of the video image of the image represented by the second video image signal is a CG image, the intensity of the edge enhancement processing is reduced, and when the type of the video image of the image represented by the second video image signal is a natural video image, the intensity of the edge enhancement processing is increased.

In this manner, the edge enhancement processing is controlled in the video image signal processing portion (2) 36B using the video image composite information, so that the appropriate sharpening processing of the image can be performed for each video image signal and failure such as deterioration of image quality caused by sharpening a video image that has no need for sharpening can be prevented.

Note that, the embodiment above has been described with the program logo and the telop taken for an example of the video image represented by the second video image signal, which is also applicable to the case of a sub-screen to be combined on the side of the receiving device, a video image of P in P (picture in picture), and a video image of CG animation.

Furthermore, the case where the program logo illustrated as the video image represented by the second video image signal is static (with speed of zero) has been described in the embodiment above, there is also considered the case where the program logo changes the position for each frame, that is, moves. In such a case, since the moving speed between frames can be obtained from the information about the position of the program logo for each frame, the similar processing to the processing for the telop above can be performed with the use of information about the moving speed.

As described above, in the second embodiment of the present invention, the second video image signal is not superimposed on the first video image signal on the side of the transmitting device, and each of the video image signals is sent to the side of the receiving device in a state of being separated. At the time, the information concerning the second video image signal to be superimposed on the first video image signal (the video image composite information that indicates a position and an area where the second video image signal is superimposed on the first video image signal, and moving speed) is transmitted together with each of the video image signals. In the receiving side, the video image signal processing such as the FRC processing to the first video image signal and the second video image signal is appropriately controlled by using the video image composite information and each superimposing processing is performed to generate the final output image. This makes it possible to prevent deterioration of an image in and around the part on which the second video image signal is superimposed.

Note that, the example of the second embodiment of the present invention is configured to combine the first video image signal with the second video image signal after performing the video image signal processing individually, but the embodiment may also be configured to perform the video image signal processing after combining the first video image signal with the second video image signal on the previous stage of the video image signal processing. This makes it possible to simplify the configuration of the video image receiving device. With such a configuration, similarly to the video image receiving device in the first embodiment, it is possible to prevent deterioration of an image in and around an area of the second video image signal and generate a video image with higher quality by performing the video image signal processing that is different from other areas to an area in which the second video image signal is superimposed on the first video image signal by using the video image composite information.

Moreover, the second embodiment of the present invention may be configured such that whether the second video image signal is superimposed on the first video image signal in the video image combining processing portion 38, or the second video image signal is not superimposed on the first video image signal to output only the first video image signal is selectable by a user. This makes it possible for a viewer to view a video image on which an image such as a program logo or telop, represented by the second video image signal, is not superimposed.

Furthermore, in the first and the second embodiments, description has been given for the case where the video image transmitting device and the video image receiving device of the present invention are applied to a television broadcast system using a radio wave, but the similar system is also applicable to a broadcast by cable or a streaming broadcast by network.

Moreover, in the first and the second embodiments, description has been given for the video image transmitting device and the video image receiving device in the television broadcast system, but the application of the present invention is not limited thereto. The exemplary configuration of the video image transmitting device shown in Fig. 4 or 6 is also applicable to the recording part of a so-called video image recording device such as a hard disc recorder or a DVD recorder, for example. In this case, it may be configured so that output data in the multiplexing processing portion 5 or the multiplexing processing portion 25 of Fig. 4 or 6 is recorded on a certain recording medium.

Similarly, the exemplary configuration of the video image receiving device shown in Fig. 5 or 7 is also applicable to the reproducing part of a so-called video image reproducing device such as a hard disc recorder or a DVD recorder, for example. In this case, it may be configured such that a reading device that reads data from a recording medium is added instead of the receiving portion 12 of Fig. 5 or 7 to output the information read from the recording medium to the multiplexed data separating processing portion 13 or the multiplexed data separating processing portion 33.

Furthermore, in the first and the second embodiments, the configuration in which the video images generated by the video image receiving devices 11 and 31 are output on the external display portion 17 has been described, but may also be applied to the video image displaying device in which the video image receiving devices 11 and 31 configured as described above and the display portion 17 are integrally configured.

In addition, in the first and the second embodiments, description has been given for the case where the two second video image signals that represent the program logo and the telop are superimposed on the first video image signal. In this manner, a plurality of second video image signals may be superimposed, and in this case, video image composite information for each of the plurality of second video image signals may be added to perform a different video image signal processing for each of the plurality of second video image signals.

Furthermore, in the first and the second embodiments, description has been given for the case where the video image signal processing for the second video image signal is controlled by using the video image composite information concerning the second video image signal, but it is obvious that it may be configured such that the video image composite information concerning the first video image signal may be added in addition thereto or instead thereof, and used to control the video image signal processing for the first video image signal.

In the above description, although an example of the embodiments about the video image transmitting device, the video image receiving device, the video image recording device, the video image reproducing device, and the video image displaying device of the present invention has been described, the description also facilitates understanding of a processing program that executes the present video image transmitting method, the video image receiving method, the video image recording method, the video image reproducing method, and the video image displaying method by a computer as a program, and a program recording medium in which the processing program is recorded on a computer readable recording medium.

## Claims

1. A video image transmitting device for transmitting a composite video image signal in which a second video image signal that is different from a first video image signal is superimposed on the first video image signal, wherein
information concerning the second video image signal that is superimposed on the first video image signal is added to the composite video image signal and transmitted.

2. The video image transmitting device as defined in claim 1, wherein
the information concerning the second video image signal includes information indicating a position of the second video image signal superimposed on the first video image signal.

3. The video image transmitting device as defined in claim 1 or 2, wherein
the information concerning the second video image signal includes information indicating an area of the second video image signal superimposed on the first video image signal.

4. The video image transmitting device as defined in any one of claims 1 to 3, wherein
the information concerning the second video image signal includes information indicating moving speed of a video image represented by the second video image signal superimposed on the first video image signal.

5. The video image transmitting device as defined in any one of claims 1 to 4, wherein
the information concerning the second video image signal includes information indicating sharpness of an edge of the video image represented by the second video image signal superimposed on the first video image signal.

6. The video image transmitting device as defined in any one of claims 1 to 5, wherein
the information concerning the second video image signal includes information indicating a type of the video image represented by the second video image signal superimposed on the first video image signal.

7. A video image receiving device for receiving a composite video image signal in which a second video image signal that is different from a first video image signal is superimposed on the first video image signal, and information concerning the second video image signal superimposed on the first video image signal, wherein
a video image signal processing means is included for performing video image signal processing, that is different from the one performed to other areas, to an area on which the second video image signal is superimposed using the information concerning the second video image signal.

8. The video image receiving device as defined in claim 7, wherein
the video image signal processing means includes a frame rate converting portion using motion compensation processing, and the frame rate converting portion performs motion compensation processing, that is different from the one performed to other areas, to the area on which the second video image signal is superimposed using the information concerning the second video image signal.

9. The video image receiving device as defined in claim 7, wherein
the video image signal processing means includes an interlace/progressive converting portion using motion compensation processing, and the interlace/progressive converting portion performs motion compensation processing, that is different from the one performed to other areas, to the area on which the second video image signal is superimposed using the information concerning the second video image signal.

10. The video image receiving device as defined in claim 8 or 9, wherein
when the information concerning the second video image signal indicates moving speed of the video image represented by the second video image signal is at zero, an intensity of the motion compensation processing to the area on which the second video image signal is superimposed is set to be zero.

11. The video image receiving device as defined in claim 10, wherein
filtering processing is given to a boundary part between the area on which the second video image signal is superimposed and other areas.

12. The video image receiving device as defined in any one of claims 8 to 11, wherein
the video image signal processing means includes a motion vector detecting portion for dividing a frame or a field of an input image signal into a plurality of blocks of a predetermined size that is determined in advance, and detecting a motion vector showing an amount and a direction of motion between input image signals which are apart from each other by at least one or more frames or fields for each block, and
the motion vector detecting portion includes:
a storage portion for accumulating at least one frame or one field of a motion vector detected for each block;
an initial deflection vector selecting portion for selecting a motion vector whose value is the most suitable for the motion of a detected block as an initial deflection vector of the detected block, from a group of candidate vectors read the motion vectors accumulated out of the storage portion; and
a motion vector calculating portion for obtaining and outputting a motion vector of a detected block by performing a predetermined calculation using the initial deflection vector selected by the initial deflection vector selecting portion as a starting point, and accumulating the obtained vector in the storage portion.

13. The video image receiving device as defined in claim 12, wherein
moving speed of the video image represented by the second video image signal, which is indicated by the information concerning the second video image signal is added to the initial deflection vector selecting portion as one of the group of candidate vectors, for the area on which the second video image signal is superimposed.

14. The video image receiving device as defined in claim 13, wherein
the initial deflection vector selecting portion performs selecting processing of an initial deflection vector by performing weighting so that the added candidate vector is likely to be selected.

15. The video image receiving device as defined in claim 12, wherein
the motion vector calculating portion changes a calculating method for the area on which the second video image signal is superimposed in order to obtain a vector of which direction is the same as the moving direction of the video image represented by the second video image signal indicated by the information concerning the second video image signal.

16. The video image receiving device as defined in claim 7, wherein
the video image signal processing means includes edge enhancement portion for performing an edge enhancement processing, and the edge enhancement portion performs the edge enhancement processing, that is different from the one performed to other areas, for the area on which the second video image signal is superimposed using the information concerning the second video image signal.

17. The video image receiving device as defined in claim 16, wherein
an intensity of the edge enhancement processing for the area on which the second video image signal is superimposed, is varied from an intensity of the edge enhancement processing for other areas.

18. The video image receiving device as defined in claim 17, wherein
the intensity of the edge enhancement processing is set to be zero for the area on which the second video image signal is superimposed.

19. The video image receiving device as defined in claim 17, wherein
the information concerning the second video image signal includes information indicating sharpness of an edge of the video image represented by the second video image signal superimposed on the first video image signal.

20. The video image receiving device as defined in claim 19, wherein
when the edge of the video image represented by the second video image signal is sharp, the intensity of the edge enhancement processing is reduced, and when the edge of the video image represented by the second video image signal is soft, the intensity of the edge enhancement processing is increased.

21. The video image receiving device as defined in claim 17, wherein
the information concerning the second video image signal includes information indicating a type of the video image represented by the second video image signal superimposed on the first video image signal.

22. The video image receiving device as defined in claim 21, wherein
when the type of the video image represented by the second video image signal is a computer graphics video image, the intensity of the edge enhancement processing is reduced, and when the type of the video image represented by the second video image signal is a natural video image, the intensity of the edge enhancement processing is increased.

23. A video image displaying device comprising the video image receiving device as defined in any one of claims 7 to 22.

24. A video image transmitting device for transmitting a first video image signal and a second video image signal to be superimposed on the first video image signal, wherein
information concerning the second video image signal to be superimposed on the first video image signal is added to the first video image signal and/or the second video image signal and transmitted.

25. The video image transmitting device as defined in claim 24, wherein
the information concerning the second video image signal includes information indicating a position of the second video image signal to be superimposed on the first video image signal.

26. The video image transmitting device as defined in claim 24 or 25, wherein
the information concerning the second video image signal includes information indicating an area of the second video image signal to be superimposed on the first video image signal.

27. The video image transmitting device as defined in any one of claims 24 to 26, wherein
the information concerning the second video image signal includes information indicating moving speed of a video image represented by the second video image signal to be superimposed on the first video image signal.

28. The video image transmitting device as defined in any one of claims 24 to 27, wherein
the information concerning the second video image signal includes information indicating sharpness of an edge of the video image represented by the second video image signal to be superimposed on the first video image signal.

29. The video image transmitting device as defined in any one of claims 24 to 28, wherein
the information concerning the second video image signal includes information indicating a type of the video image represented by the second video image signal to be superimposed on the first video image signal.

30. A video image receiving device for receiving a first video image signal, a second video image signal to be superimposed on the first video image signal, and information concerning the second video image signal to be superimposed on the first video image signal, comprising:
a first video image signal processing means for performing the predetermined video image signal processing for the first video image signal;
a second video image signal processing means for performing the predetermined video image signal processing for the second video image signal using the information concerning the second video image signal; and
a video image combining processing means for superimposing the first video image signal to which the video image signal processing has been given by the first video image signal processing means on the second video image signal to which the video image signal processing has been given by the second video image signal processing means, using the information concerning the second video image signal.

31. The video image receiving device as defined in claim 30, wherein
the second video image signal processing means includes a frame rate converting portion using motion compensation processing, and the frame rate converting portion controls the motion compensation processing to the second video image signal using the information concerning the second video image signal.

32. The video image receiving device as defined in claim 30, wherein
the second video image signal processing means includes an interlace/progressive converting portion using motion compensation processing, and the interlace/progressive converting portion controls the motion compensation processing to the second video image signal using the information concerning the second video image signal.

33. The video image receiving device as defined in claim 31 or 32, wherein
the second video image signal processing means includes a motion vector detecting portion for dividing a frame or a field of an input image signal into a plurality of blocks of a predetermined size that is determined in advance, and detecting a motion vector showing an amount and a direction of motion between input image signals that are apart from each other by at least one or more frames or fields for each block, and
the motion vector detecting portion includes:
a storage portion for accumulating a motion vector detected for each block of at least one frame or one field;
an initial deflection vector selecting portion for selecting a motion vector whose value is the most suitable for the motion of a detected block as an initial deflection vector of the detected block, from a group of candidate vectors read the motion vectors accumulated out of the storage portion; and
a motion vector calculating portion for obtaining and outputting a motion vector of a detected block by performing a predetermined calculation using the initial deflection vector selected by the initial deflection vector selecting portion as a starting point, and accumulating the obtained vector in the storage portion.

34. The video image receiving device as defined in claim 33, wherein
moving speed of a video image represented by the second video image signal, which is indicated by the information concerning the second video image signal is added to the initial deflection vector selecting portion as one of the group of candidate vectors.

35. The video image receiving device as defined in claim 34, wherein
the initial deflection vector selecting portion performs selecting processing of an initial deflection vector by performing weighting so that the added candidate vector is likely to be selected.

36. The video image receiving device as defined in claim 33, wherein
the motion vector calculating portion changes a calculating method in order to obtain a vector of which direction is the same as a moving direction of the video image represented by the second video image signal indicated by the information concerning the second video image signal.

37. The video image receiving device as defined in claim 30, wherein
the second video image signal processing means includes an edge enhancement portion for performing edge enhancement processing, and the edge enhancement portion performs the edge enhancement processing to the second video image signal using the information concerning the second video image signal.

38. The video image receiving device as defined in claim 37, wherein
an intensity of the edge enhancement processing is controlled to the second video image signal using the information concerning the second video image signal.

39. The video image receiving device as defined in claim 38, wherein
the intensity of the edge enhancement processing to the second video image signal is set to be zero.

40. The video image receiving device as defined in claim 38, wherein
the information concerning the second video image signal includes information indicating sharpness of an edge of the video image represented by the second video image signal to be superimposed on the first video image signal.

41. The video image receiving device as defined in claim 40, wherein
when the edge of the video image represented by the second video image signal is sharp, the intensity of the edge enhancement processing is reduced, and when the edge of the video image represented by the second video image signal is soft, the intensity of the edge enhancement processing is increased.

42. The video image receiving device as defined in claim 41, wherein
the information concerning the second video image signal includes information indicating a type of the video image represented by the second video image signal to be superimposed on the first video image signal.

43. The video image receiving device as defined in claim 42, wherein
when the type of the video image represented by the second video image signal is a computer graphics video image, the intensity of the edge enhancement processing is reduced, and when the type of the video image represented by the second video image signal is a natural video image, the intensity of the edge enhancement processing is increased.

44. A video image displaying device comprising the video image receiving device as defined in any one of claims 30 to 43.

45. A video image recording device for recording a composite video image signal, in which a second video image signal that is different from a first video image signal is superimposed on the first video image signal on an information medium, wherein
information concerning the second video image signal that is superimposed on the first video image signal is added to the composite video image signal and recorded.

46. A video image reproducing device for reproducing a composite video image signal, in which a second video image signal that is different from a first video image signal is superimposed on the first video image signal, and information concerning the second video image signal that is superimposed on the first video image signal, from an information medium, wherein
a video image signal processing means is included for performing video image signal processing, that is different from the one performed to other areas, to an area on which the second video image signal is superimposed using the information concerning the second video image signal.

47. A video image recording device for recording a first video image signal and a second video image signal to be superimposed on the first video image signal in an information medium, wherein
information concerning the second video image signal to be superimposed on the first video image signal is added to the first video image signal and/or the second video image signal and recorded.

48. A video image reproducing device for reproducing a first video image signal, a second video image signal to be superimposed on the first video image signal, and information concerning the second video image signal to be superimposed on the first video image signal from an information medium, comprising:
a first video image signal processing means for performing the predetermined video image signal processing for the first video image signal;
a second video image signal processing means for performing the predetermined video image signal processing for the second video image signal using the information concerning the second video image signal; and
a video image combining processing means for superimposing the first video image signal to which the video image signal processing has been given by the first video image signal processing means on the second video image signal to which the video image signal processing has been given by the second video image signal processing means using the information concerning the second video image signal.
